# EUROPEAN PATENT APPLICATION

(11) **EP 2 177 811 A2**
(43) Date of publication of application: **21.04.2010**
(21) Application number: 09252444.6
(22) Date of filing: 19.10.2009
(51) Int. Cl.: F16M 13/00

(54) **Media player support**

(30) Priority: 17.10.2008 GB 0819106; 19.11.2008 GB 0821172
(71) Applicant: Native Design Limited, 5 Garden Walk London EC2A 3EQ (GB)
(72) Inventor: Warren, Morten, London EC2A 3EQ (GB); Harris, Paul, London EC2A 3EQ (GB)
(74) Representative: Haslam, Simon David

(57) **Abstract**

A media player support is provided, the media player support comprising:
a base (3);
a support member (2) rotatably mounted to the base (3), the support member (2) being for receiving a media player; and
a stem (24),
wherein the support member is rotatably mounted to the base via the stem such that the support member can be rotated between a first position and a second position, the stem having a channel extending therethrough for receiving a cable for connecting the media player to the base.

## Description

The present invention relates to media player supports, in particular, although not necessarily exclusively, portable media player supports for 'docking' a media player to an external electrical device.

A media player is an electronic device capable of storing and playing digital media, e.g. audio, video and image files.

Although a portable media player usually includes its own playback means, e.g. headphones and/or display screen, and can be handheld, it is common to place a media player in a support, particularly when connecting ('docking') the media player to an external electrical device such as an audio amplifier, stereo system, or large display screen.

Media players commonly include a casing containing an array of electronics and digital storage devices (e.g. solid-state memory or hard drives). The casing is often substantially cuboid, with opposing front and rear surfaces and side surfaces connecting the front and rear surfaces together. Controls (e.g. buttons) and/or a display screen (e.g. a touch sensitive display screen) are usually provided on the front surface of the casing, enabling a user to operate the media player.

Some known media player supports include a housing having a recess into which a bottom end of the media player casing is inserted. An electrical connector may be located within the recess for connecting to a corresponding electrical connector disposed at the bottom end of the media player, enabling signals to be sent between the media player and the electrical devices associated with the support, e.g. via a cable.

Other known media player supports utilise a plurality of arms that grip around the media player casing.

However, known media player supports are bulky and cumbersome and can interfere with operation of the media player, and may lead to the user experiencing discomfort during operation.

Many modern media players have a rectangular display screen which can display information in two different orientations: a vertical ('portrait') orientation and a horizontal ('landscape') orientation. The display screen may rotate the displayed information between the two orientations automatically upon rotation of the media player.

However, known media player supports are not appropriate for both media players with the rotatable screen function and media players without the rotatable screen function.

According to a first aspect of the present invention, there is provided a media player support comprising:
a holder having a main panel and two or more side panels connected to, and projecting from, edges of the main panel,
the main panel and the side panels defining a space for receiving a media player such that a rear surface of the media player contacts the main panel, and the side panels contact respective side surfaces of the media player,
wherein the side panels are arranged such that, when the media player is received in the space, distal ends of the side panels do not project beyond the side surfaces of the media player.

According to a second aspect of the present invention, there is provided a media player support comprising:
a holder having a main panel and two or more side panels, connected to, and projecting from, edges of the main panel,
the main panel and the side panels defining a space for receiving a media player such that a rear surface of the media player contacts the main panel, and the side panels contact respective side surfaces of the media player,
wherein the main panel and the side panels each have a thickness of less than 3 mm.

Preferably, the side panels and/or the main panel of the support in the first aspect of the invention also have a thickness of less than 3 mm. Essentially, the side panels and main panel may be thin, plate-like, elements. The holder may take the form of a cradle or tray.

In the first and second aspects, preferably the media player is a portable media player, which, when not being held by the support, may be operated in a handheld manner. The media player may have one or more operation buttons located on a front surface thereof. A display screen may also be located on the front surface. Preferably, the media player is substantially cuboid, with opposing front and rear surfaces and four sides surfaces connecting the front and rear surfaces together. The front and rear surfaces may extend across a substantially larger area than the side surfaces. The side surfaces may be flat or curved. Corners between the side surfaces may be sharp of curved. The media player may be an iPod^{™}' iTouch^{™} or iPhone^{™}, for example. The media player may in some circumstances function as a satellite navigation device, and the support may be arranged to hold the media player on a car windscreen or dash board via a sucker.

By providing a support for a media player, which can support both rear and side surfaces of the media player with panels configured as set out above, the support can provide a firm hold to the media player whilst enabling the user of the media player to operate the media player with little or no interference by the support. By employing side panels that do not extend beyond side surfaces of the media player, access to the controls on the front surface of the media from any angle may not be impeded by the holder. By employing panels, e.g. with thicknesses of less than 3 mm, the holder may add little additional bulk to the media player. In effect, the holder may provide a very discreet means to hold the media player. The user may therefore operate the media player in the same or similar manner as they would if the media player were unsupported other than by the operator's own hand. For example, the user may be able to grip both the holder and the media player in their hand and operate the media player using their thumb. This may allow the user to operate the media player in a more intuitive or comfortable manner, rather than having to poke at the operation buttons with an extended finger, for example.

The support may be arranged such that, when the media player is received in the space, no part of the support extends over a front surface of the media player.

The holder may comprise additional retention features, such as snap-fit features, to enable the holder to support the media player with greater security. This may be particularly useful when the support is to hold the media player to a car windscreen or other part of a vehicle, where shock / momentary forces on the support may be common.

To support sides of the media player, the side panels may follow a curved path. This may be particularly appropriate if the side surfaces of the media player are curved. The side panels may follow a part-circular or part-elliptical path for example, e.g. a quarter-circular path or somewhere between a quarter-circular and semi-circular path. The side panels may be follow a curved path that enables snap-fitting of the media player into the holder. As an alternative to curved panels, the side panels may be flat, and may project along a straight path substantially perpendicular to front surface of the main panel. The main panel of the media player may be curved, e.g. to conform to a curved rear surface of the media player. In general, it is considered that holders of the present could be configured for use with variety of different shapes and sizes of media player.

Preferably two of the side panels, referred to hereinafter as the "first and second side panels" are connected to two respective edges of the main panel, the two edges lying substantially perpendicular to each other. Accordingly, the first and second side panels may provide support along two side surfaces of the medial player, the side surfaces extending perpendicular to each other.

The media player support may comprise a base, e.g. for locating on a surface such as a table top, desktop, window or floor etc. The base may be part of, or consist of, a music system having an amplifier and/or speakers, the holder forming part of a media player 'dock' for the music system. As one alternative, the base may be arranged to connect to a car windscreen, e.g. via a sucker. The holder may be mounted to the base, e.g. by sliding onto a fitting, such as an arm or spindle provided on the base. The holder may be releasably mounted to the base to enable removal of the holder from the base for easier placement of the media player in the holder. The holder may be rotatably mounted to the base. Rotatable mounting is preferable when the support is used with a media player having a display screen on its front surface that will display information in both vertical ('portrait') and horizontal ('landscape') orientations.

Normally, when the display screen is in the vertical orientation, the length direction of the front surface of the media player and of the display screen will extend substantially vertically and the width direction will extend substantially horizontally; and when the display screen is in the horizontal orientation, the length direction of the front surface of the media player and the display screen will extend substantially horizontally and the width direction will extend substantially vertically. The display screen may toggle between these two orientations upon a 90 degree rotation of the media player about a horizontal axis. It is conceived that the length and width of the media player may not extend precisely vertically in the respective orientations, as it may be preferable to mount the media player at an angle from vertical to enable easier viewing of the display screen, e.g. from above. Furthermore, by angling the holder to support the media player in such an angled configuration, the main panel of the holder may provide greater support for the media player against the effects of gravity. The media player/main panel may be angled from vertical at between 30 and 60 degrees, for example. An angle of 45 degrees may be appropriate. Ideally, however, the angle from vertical of the media player is not so great that it causes the media player to be unable to sense itself rotating between the vertical and horizontal orientations, which could otherwise prevent the media playing switching the information on the display screen between the two orientations.

To ensure that the media player is held firmly by the support in both orientations, the media may be rotatably mounted to the base such that the holder can be rotated between a first position in which the first side panel is located at the bottom of the holder and a second position in which the second side panel is located at the bottom of the holder. Since one of the first and second panels remains at the bottom of the holder in both orientations, one of the first and second side panels will provide support underneath the media player in both orientations, preventing the media player from falling from the support under the influence of gravity.

For greater security, the holder may comprise additional side panels arranged to contact and support additional side surfaces of the media player when the media player is received in the holder. Preferably, the holder comprises three or four side panels to contact and support three of four side surfaces of the media player respectively. By supporting at least three side surfaces, the support may enable rotation of the media player by 180 degrees, e.g. so that a horizontal orientation of the media player can be achieved 90 degrees either side of a vertical orientation. Preferably, the holder is biased to precise positions of rotation at sequential 90 rotation points, in order to make it easier for the user to rotate the media player to a precise horizontal or vertical orientation.

One or more of the side panels may extend along the entire length of a respective edge of the main panel. Nevertheless, a plurality of spaced side panels may be provided along a length of one or more edges of the main panel. Preferably at least a portion of one of the edges is left exposed, a side panel is provided with a cut-out, and/or a region of the main panel is provided with a cut-out, to provide access to a side or rear surface of the media player when mounted on the holder. This may facilitate dismounting of the media player from the holder by the user. Similar cut-outs may be employed to enable wires, cables and/or electrical connecters to extend between the media player and the base.

Preferably, the holder is rotatable mounted to the base via a stem. Preferably, a channel extends through the stem (the stem may be hollow, for example). A cable for connecting the media player to the base (e.g. an audio device) is preferably arranged to travel through the channel. Accordingly, the cable may be less likely to twist during rotation of the holder/media player, since it may effectively travel along the rotational axis of the holder, and the cable may be hidden from view, improving aesthetics.

Preferably, the media player support comprises a locking mechanism operable between a first state in which it prevents rotation of the holder and a second state in which it allows rotation of the holder.

According to a third aspect of the present invention, there is provided a media player support comprising:
a base; and
a support member rotatably mounted to the base, the support member being for receiving a media player,
wherein the support member is rotatably mounted to the base such that the support member can be rotated between a first position and a second position, the support comprising a locking mechanism, operable between a first state in which it prevents rotation of the support member between the first and second positions and a second state in which it allows rotation of the support member between the first and second positions.

According to a fourth aspect of the present invention, there is provided a media player support comprising:
a base; and
a support member rotatably mounted to the base, the support member being for receiving a media player,
wherein the support member is rotatably mounted to the base such that the support member can be rotated between a first position and a second position, the support further comprising a damping means for reducing shock applied to the support member upon rotation between the first and second positions.

According to a fifth aspect of the present invention, there is provided a media player support comprising:
a base;
a support member rotatably mounted to the base, the support member being for receiving a media player; and
a stem,
wherein the support member is rotatably mounted to the base via the stem such that the support member can be rotated between a first position and a second position, the stem having a channel extending therethrough for receiving a cable for connecting the media player to the base.

The support member of the media player support of the third, fourth and fifth aspects of the invention may comprise a holder having a main panel and two or more side panels connected to, and projecting from, edges of the main panel, the main panel and the side panels defining a space for receiving a media player such that a rear surface of the media player, in use, contacts the main panel, and the side panels, in use, contact respective side surfaces of the media player

The side panels may be arranged such that, when the media player is received in the space, distal ends of the side panels do not project beyond the side surfaces of the media player.

The main panel and the side panels may each have a thickness of less than 3 mm.

Essentially, the side panels and main panel may be thin, plate-like, elements. The holder may take the form of a cradle or tray.

In the third, fourth and fifth aspects of the present invention, the media player may be a portable media player, which, when not being held by the support, may be operated in a handheld manner. The media player may have one or more operation buttons located on a front surface thereof. A display screen may also be located on the front surface. Preferably, the media player is substantially cuboid, with opposing front and rear surfaces and four sides surfaces connecting the front and rear surfaces together. The front and rear surfaces may extend across a substantially larger area than the side surfaces. The side surfaces may be flat or curved. Corners between the side surfaces may be sharp of curved. The media player may be an iPod^{™}' iTouch^{™} or iPhone^{™}, for example.

By providing a support for a media player, which can support both rear and side surfaces of the media player with panels configured as set out above, the support can provide a firm hold to the media player whilst enabling the user of the media player to operate the media player with little or no interference by the support. By employing side panels that do not extend beyond side surfaces of the media player, access to the controls on the front surface of the media from any angle may not be impeded by the holder. By employing panels, e.g. with thicknesses of less than 3 mm, the holder may add little additional bulk to the media player. In effect, the holder may provide a very discreet means to hold the media player. The user may therefore operate the media player in the same or similar manner as they would if the media player were unsupported other than by the operator's own hand.

The support may be arranged such that, when the media player is received in the space, no part of the support extends over a front surface of the media player.

The support member may comprise additional retention features, such as snap-fit features, to enable the support member to support the media player with greater security.

To support sides of the media player, the side panels may follow a curved path. This may be particularly appropriate if the side surfaces of the media player are curved. The side panels may follow a part-circular or part-elliptical path for example, e.g. a quarter-circular path or somewhere between a quarter-circular and semi-circular path. The side panels may be follow a curved path that enables snap-fitting of the media player into the holder. As an alternative to curved panels, the side panels may be flat, and may project along a straight path substantially perpendicular to front surface of the main panel. The main panel of the media player may be curved, e.g. to conform to a curved rear surface of the media player. In general, it is considered that said holder could be configured for use with variety of different shapes and sizes of media player.

Preferably two of the side panels, referred to hereinafter as the "first and second side panels" are connected to two respective edges of the main panel, the two edges lying substantially perpendicular to each other. Accordingly, the first and second side panels may provide support along two side surfaces of the medial player, the side surfaces extending perpendicular to each other.

In the third, fourth and fifth aspects of the present invention, the base is typically suitable for location on a surface such as a table top, desktop, window or floor etc.
The base may be part of, or consist of, a music system having an amplifier and/or speakers, the support member forming part of a media player 'dock' for the music system. As one alternative, the base may be arranged to connect to a car windscreen, e.g. via a sucker.

The support member may be releasably mounted to the base to enable removal of the support member from the base for easier placement of the media player in the support member. The support member may be rotatably mounted to the base.

In the third, fourth and fifth aspects of the present invention, when the support member moves between the first and second positions, it may place the media player in the vertical and horizontal positions respectively, or in the two horizontal positions 90 degrees either side of vertical respectively, as discussed previously.

Normally, when the display screen is in the vertical orientation, the length direction of the front surface of the media player and of the display screen will extend substantially vertically and the width direction will extend substantially horizontally; and when the display screen is in the horizontal orientation, the length direction of the front surface of the media player and the display screen will extend substantially horizontally and the width direction will extend substantially vertically. The display screen may toggle between these two orientations upon a 90 degree rotation of the media player about a horizontal axis. It is conceived that the length and width of the media player may not extend precisely vertically in the respective orientations, as it may be preferable to mount the media player at an angle from vertical to enable easier viewing of the display screen, e.g. from above. The media player may be angled from vertical at between 30 and 60 degrees, for example. An angle of 45 degrees may be appropriate. Ideally, however, the angle from vertical of the media player is not so great that it causes the media player to be unable to sense itself rotating between the vertical and horizontal orientations, which could otherwise prevent the media player switching the information on the display screen between the two orientations.

The media player support of the fifth aspect of the present invention is provided with a stem with a channel extending therethrough for receiving a cable. The media player supports of the third and fourth aspects of the present invention may also be provided with a stem with a channel extending therethrough for receiving a cable.

A cable for connecting the media player to the base (e.g. an audio device) is preferably arranged to travel through the channel provided in the stem. Accordingly, the cable may be less likely to twist during rotation of the support member/media player, since it may effectively travel along the rotational axis of the support member, and the cable may be hidden from view, improving aesthetics.

Preferably, the supports of the fourth and fifth aspects of the present invention may comprise a locking mechanism operable between a first state in which it prevents rotation of the support member and a second state in which it allows rotation of the support member. Preferably, the locking mechanism is operable between a first state in which it prevents rotation of the support member between the first and second positions and a second state in which it allows rotation of the support member between the first and second positions.

The support of the third and fifth aspects of the present invention may comprise a damping means for reducing shock applied to the support member upon rotation between the first and second positions.

The stem may be rotatable relative to the base.

The stem may be biased, on rotation of the stem, into one or a plurality of rotational positions. These rotational positions may, for example, be 90 degrees apart, rotationally.

The support may further comprise a mounting unit for rotatably mounting the support member to the base. Such a mounting unit permits rotation of the stem relative to the base (and optionally the mounting unit). The mounting unit may include spaced forward and rear plates, each plate having a circular opening for receiving a portion of the stem and permitting rotation of the stem relative to the unit.

The stem may be provided with at least one cam surface which, in use, is engaged by a biasing member (the biasing member preferably being provided by the support and further preferably by one of the forward and rear plates) so that the support member (and therefore the attached media player) is, on rotation, biased to a particular rotational position. It is preferred that the stem is provided with provided with a plurality of cam surfaces, one or more of which, in use, is engaged by said biasing member at any one time so that the support member (and therefore the media player) is, on rotation, biased into one of a plurality of rotational positions. It is preferred that the stem is provided with a groove having a substantially square periphery. The square periphery provides four cam surfaces.

The stem may be associated with a projection, wherein rotation of the stem causes rotational movement of the projection. The support may be provided with two stop members, the two stop members defining the limits of angular rotation of the stem, the rotation of the stem being limited by engagement of the projection with one of the two stop members. The two stop members may typically permit 180 degrees of rotation. The two stop members may be provided by the forward plate. When used in combination with the stop member/projection arrangement, the cam surface and biasing member would typically bias the player into three different orientations (e.g. landscape, portrait, inverted landscape).

The support may be further provided with a retention clip which engages with the stem and inhibits unwanted withdrawal of the stem from the base. The retention clip may be provided with said projection.

In any of the above aspects set out above, to operate the locking mechanism, the media player support may comprise an adapter. The adapter may be connectable to the support member and/or the media player and when connected may interact with the locking mechanism when the support member and media player are mounted to the base.

When the adapter is not connected to the support member or media player, the locking mechanism may be in one of the first and second states (e.g. the first "locked" state). However, when the adapter is connected to the support member or media player, the adapter may interact with the locking mechanism and place the locking mechanism in the other of the first state and second states (e.g. the second "unlocked" state).

As indicated above, the support member may be a holder as set out above with respect to the first and second aspects of the present invention. However, as an alternative, the holder may be employed as the adapter. In this scenario, the support member may comprise a panel rotatably mounted to the base,
wherein, upon mounting the holder (adapter) to the panel, e.g. by sliding the holder onto the panel, the holder places the locking mechanism in the desired state.

The support of the fourth aspect may further comprise a locking mechanism as set out in the third aspect.

In the above aspects, the locking mechanism may comprise a pin which is located in a slot. The slot may have a first section and a second section. The first section may provide a path for the pin to travel during rotation of the support member. For example, the first section may be a curved slot section, curving around the rotational axis of the support member. The second section may not provide a path for the pin to travel during rotation of the support member, making rotation of the support member impossible when the pin is located in this section. For example, the second section may have a dimension little larger than the cross-section of the pin. Preferably, the adapter is arranged to force the pin from one of the slot sections to the other, as appropriate for achieving the desired locking state, when the adapter is connected to the media player and/or support member.

Preferably, in the above aspects, the rotation of the support member is limited so that it cannot be rotated beyond the first and second positions. The limitation may be achieved using stops.

The damping means of the fourth aspect may prevent the media player from being dislodged from the support upon generation of shock within the support. This may occur e.g. upon the support reaching the desired orientation, whereupon shock may be applied to the support member by the stops and may be transmitted through the support member to the media player. The damping means may be provided by a shock absorbing means such as a spring, e.g. a leaf spring or helical spring, and/or by damping grease.

Embodiments of the invention will now be described by way of example with reference to the accompanying drawings in which:
Fig. 1 shows a front view of a holder for a support according to a first embodiment of the present invention;
Fig. 2 shows a rear view of the holder of Fig. 1;
Fig. 3 shows a rear view of the holder of Fig. 1 in combination with the front plate of a support panel;
Fig. 4 shows a rear view of the support panel of Fig. 3;
Fig. 5 shows a rear view of the support according to the first embodiment of the present invention mounted to a base;
Fig. 6 shows a rear view of part of a mounting unit used in the support of Fig. 5;
Fig. 7 shows a rear view of a retention clip and leaf springs used in the mounting unit of Fig. 5;
Figs. 8a and 8b show rear and front exploded views respectively of the support according to the first embodiment of the present invention;
Fig. 9 shows a cross-sectional side view of a media player located in the holder of the first embodiment of the present invention.

Figs. 10a and 10b show cross-sectional side views of a media player, and a holder for a support according to a second embodiment of the present invention, before and after insertion of the media player into the holder respectively.

Figs. 11a and 11b show side and front schematic views respectively of a support according to a third embodiment of the invention in which a media player is supported by the support in a non-rotatable manner;

Figs. 12a and 12b show side and front schematic views respectively of the support of Figs. 11a and 11b in which a media player is supported by the support in a rotatable manner; and

Figs. 13a and 13b show side and front schematic views respectively of the support of Figs. 11a and 11b in which the media player has been rotated by 90 degrees.

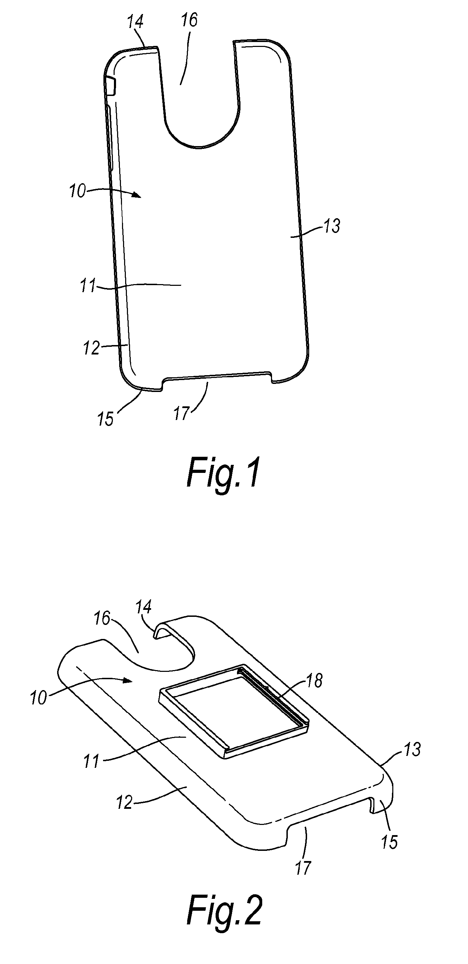

A holder 10 for a portable media player support according to a first embodiment of the present invention is shown in Figs. 1 and 2. The holder 10 takes the form a cradle or tray, and comprises a main panel 11 and a plurality of side panels 12-15 connected to and projecting from side edges of the main panel 10. The main panel 10 is substantially rectangular in shape, with first and second side panels 12, 13 connected to the two opposing long edges of the main panel 10 and third and fourth side panels 14, 15 connected to the two opposing short edges of the main panel.

The side panels 12-15 project in a direction substantially perpendicular to the plane of the main panel 11.
Nevertheless, curved corners are provided at the transition between the main panel 11 and the side panels 12-15. In this embodiment, the main panel 11 and side panels 12-15 are formed as a one-piece element.

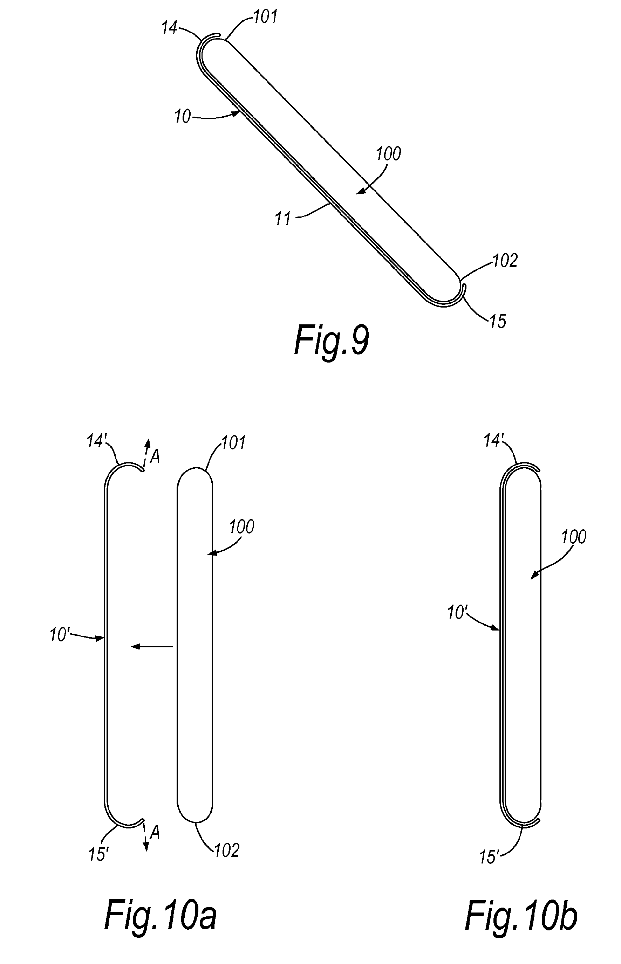

The side panels and main panel define a space for receiving a portable media player (not shown), e.g. an iPod^{™}, whereupon the front surface of the main panel 11 contacts and supports a rear surface of the media player and inner surfaces of the side panels 12-15 contact and support respective side surfaces of the media player. In this embodiment, the main panel is to be angled in use at approximately 45 degrees from vertical, to provide additional support to the media player, reducing the chances that the media player might fall out of the holder 10. The side panels 12-15 are configured such that they do not extend beyond the side surfaces of the media player (see Fig. 9, discussed below). Accordingly, the side panels 12-15 do not obstruct access to the front surface of the media player, making operation of the media player by the user easier. Furthermore, the main panel 11 and the side panels 12-15 have a thickness of about 2 mm. Accordingly, even though the holder 10 is arranged to surround substantially the rear and sides of the media player, it is discreet and does not contribute significantly to the bulk of the media player. The user can therefore grip the media player in their hand during operation, with a similar feeling to gripping the media player independently of the holder.

The holder 10 includes a first opening 16 that is provided in the third side panel 14 and an adjacent part of the main panel 11, and a second opening 17 that is provided in the fourth side panel 15. The first opening 16 provides access to the rear and side of the media player when it is mounted to the holder, allowing a user to push or pull the media player out of the holder using their fingers. The second opening 17 provides access for an electrical connector to connect to the media player.

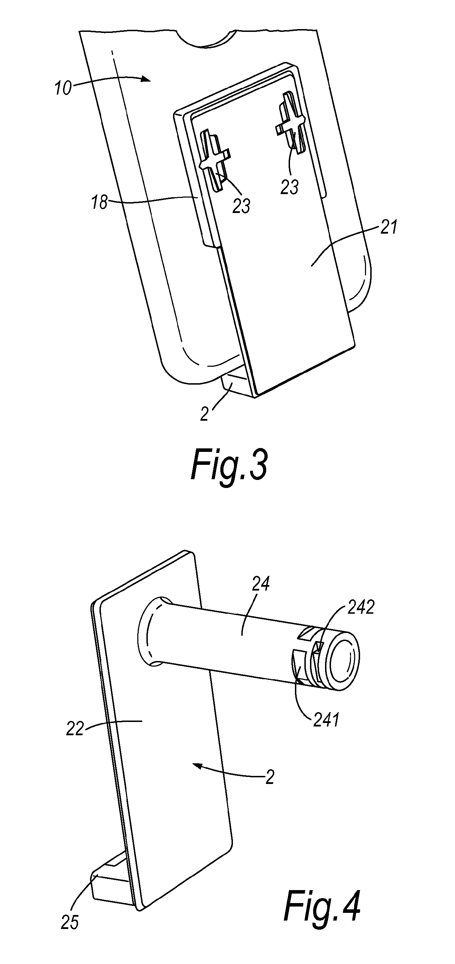

With reference to Figs. 3 and 4, the support further comprises a support plate 2 that includes a front panel 21 and a rear panel 22 (not shown in Fig. 3). A retention 18 (square upstand) is provided on the rear surface of the main panel 11 of the holder 10, the retention being arranged to receive a portion of the front panel 21 of the support plate 2. The front panel 21 includes two spring clips 23 arranged to releasably secure the front panel 21 to the retention 18, and thus secure the holder 10 to the support plate 2. The rear panel 22 includes an integral stem 24 (spindle), the integral stem 24 projecting from a rear surface of the rear panel 22 and forming part of a rotation mechanism to rotatably mount the support plate 2, and thus the holder 10, to a base 3.

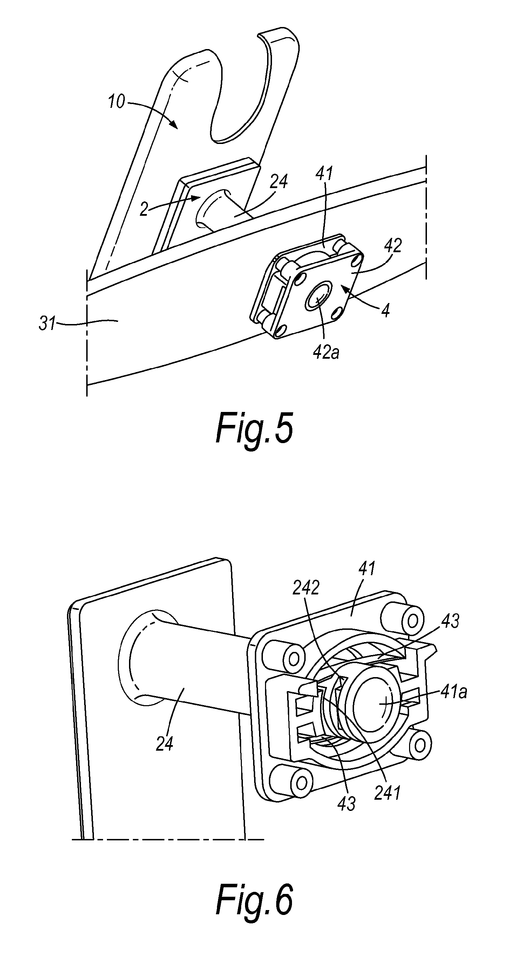

In this embodiment, the base is an audio device including an amplifier and speaker (a top facet 31 of the base is shown in Fig. 5). Along a bottom edge of the front panel 21, a ledge 25 is provided that projects forwardly and includes an electrical connector (not shown) for connecting the audio device, through the holder opening 17, to a corresponding electrical connecter on the bottom surface of the media player, via a cable (not shown). Like the side panels of the holder 10, the support ledge 25 is designed to extend no further than the side surfaces of the media player so that it does not significantly impede the improved user operation of the media player as set out above. The stem 24 is hollow. Accordingly, the cable for connecting the media player to the audio device can extend through the stem 24. By extending through the stem 24, there is a reduced chance that the cable could become twisted during rotation of the media player/holder 10; furthermore, the cable may be hidden from view, improving the aesthetics of the arrangement.

The rotation mechanism further comprises a mounting unit 4 for rotatably mounting the support plate to the base, e.g. to the top facet 31 of a base, as shown in Fig 5. The mounting unit 4 includes spaced forward and rear plates 41, 42, each plate 41, 42 having a circular opening 41a, 42a for receiving a portion of the stem 24 and permitting rotation of the stem 24 relative to the unit. In the space between the forward and rear plates 41, 42, two leaf springs 43 are provided, along with a retention clip 44.

Although the stem 24 is substantially cylindrical, proximate the rear end of the stem 24, on its surface located between the forward and rear panels 41, 42 of the mounting unit 4, first and second grooves 241, 242 are provided.

The first groove 241 has a substantially square periphery. The flat surfaces of the groove 241 provide cam surfaces against which the leaf springs 43 act (see Fig. 6). The arrangement is such that, upon rotation of the media player (and thus the holder 10 and support plate 2), the media player is biased to positions spaced at 90 degrees to each other. This is desirable so that the user can rotate the supported media player between precise positions in which a rectangular display screen on the front surface of the media player has a precise 'portrait' or 'landscape' orientation.

The second groove 242 has an irregular periphery, providing abutment surfaces 243 for the retention clip 44 to engage. Portions of the retention clip 44 locate in the second groove 242, locking the end of the stem within the mounting unit 4. The retention clip 44 is substantially circular and has a projection 442 on a peripheral edge that is arranged, upon rotation of the retention clip 44, to abut stops 411 projecting from the front plate 41, limiting the degree of rotation of the stem, and thus the media player, to 180 degrees in this embodiment. This gives the rotation mechanism a 'tri-stable' action, ensuring that the media player can rotate between three biased positions only: a vertical position, where the display screen may be in the 'portrait' mode; and two horizontal positions 90 degrees either side of the vertical position, where the display screen may be in 'landscape' mode.

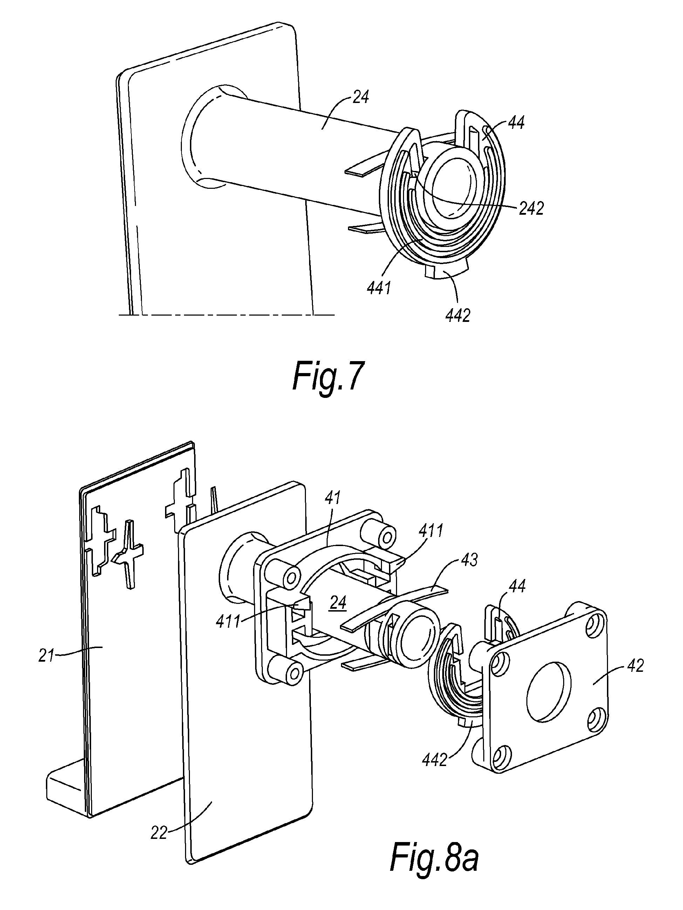

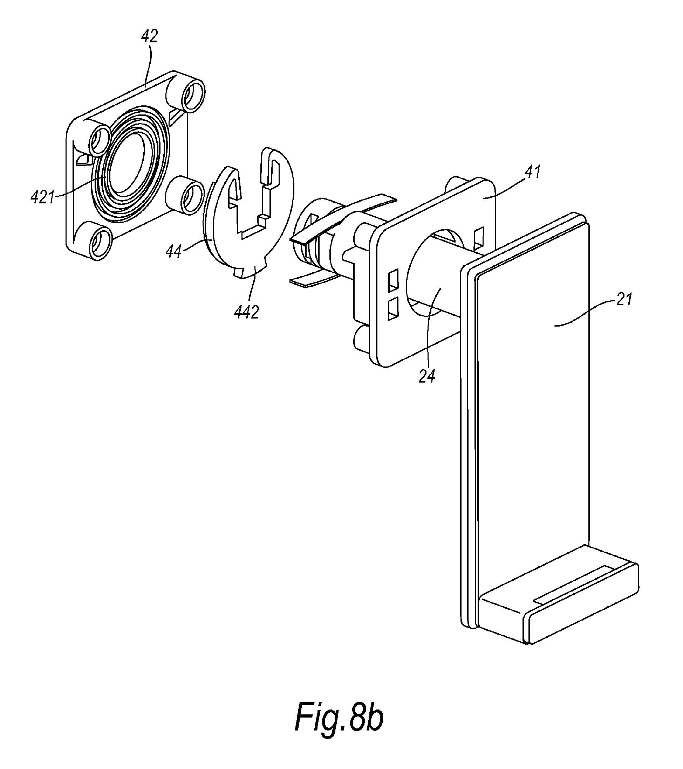

Damping grease (not shown) is provided in the mounting unit to damp the rotation mechanism. With reference to Figs. 7, 8a and 8b, the retention clip 44 comprises a plurality of concentric rib elements 441 that are arranged to slidably mate with conformal circular rib elements 421 (see Fig. 8b) projecting from the inner surface of the rear plate 42. The rib elements 441, 421 have a large surface area. This ensures that, upon rotation of the retention clip 44, more damping grease is displaced, achieving a greater damping effect. Such damping is particularly important to limit the amount of shock on the stem 24 when the media player reaches its 'stop' positions, which shock could be transmitted to the media player.

A cross-sectional side view of a media player 100, e.g. an iPhone^{™}, located within the holder 10 of the support of the present embodiment is shown in Fig. 9. The side surfaces 101, 102 of the media player 100 are curved and project along substantially semi-circular paths. The side panels 14, 15 of the holder 10 extend along curved paths conforming to the paths of the side surfaces 101, 102. However, they do not project as far as the side surfaces - they extend along substantially quarter-circular paths only and therefore end approximately half way along the side surfaces 101, 102 of the media player 100. Accordingly, as discussed above, the side panels 12-15 do not obstruct access to the front surface of the media player, making operation of the media player by the user easier. Furthermore the arrangement enables easy insertion of the media player 100 into the holder 10.

A holder 10' of a support according to a second embodiment of the present invention is shown in Figs. 10a and 10b. The holder 10' is identical to the holder 10 of Fig. 9, except that the side panels 14', 15' project along longer curved paths. In fact, the side panels 14', 15' project almost as far as the side surfaces 101, 102 of the media player. The side panels 14, 15 begin to curve back on themselves and they therefore obstruct slightly the opening via which the media player 100 is inserted into the holder 10'. The opening is therefore slightly smaller than the media player 100 and accordingly the side panels 14, 15 must be displaced during insertion of the media player 100 into the holder 10'. Upon insertion, the side panels are arranged to flex outwardly as indicated by arrows A, and spring or snap back into position, trapping the media player in the holder 10' as shown in Fig. 10b. Essentially, the arrangement provides for snap-fitting of the media player 100 into the holder 10'. The may mean that the holder need not be arranged at an incline as shown in Fig. 9, since gravity need not be relied upon to ensure that the media player remains secure in the holder 10'. This arrangement may make the holder 10' particularly suitable for supporting the media player 100 within a car, e.g. mounted on a car window, where vibrations or bumps could otherwise result in the media player 100 being thrown from the holder 10'.

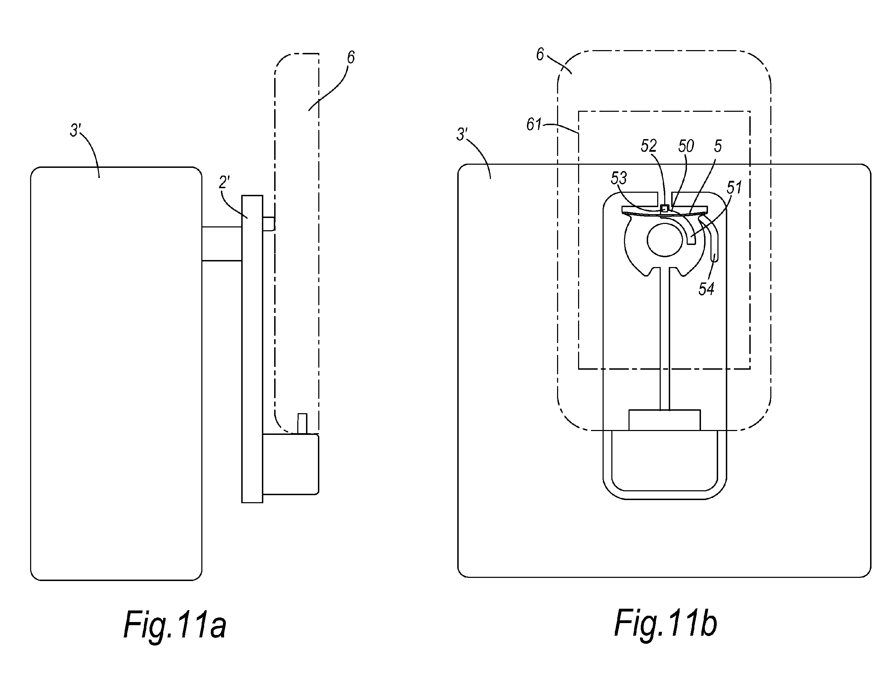

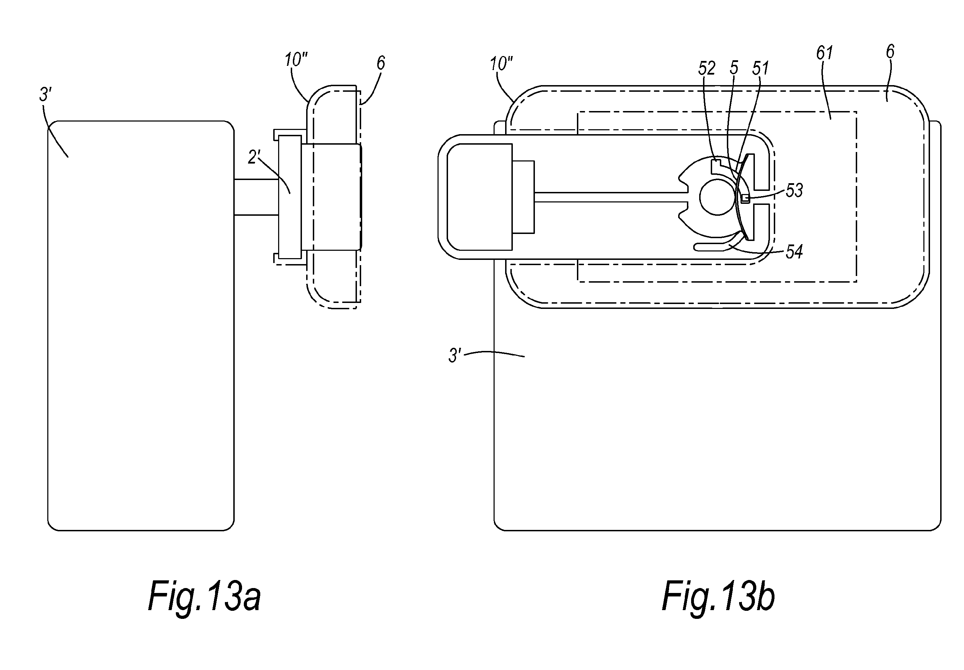

A media player support according to a third embodiment of the present invention is shown in Figs. 11a to 13b. The support comprises a support plate 2' rotatably mounted to a base 3' in a similar manner to the first embodiment of the invention. However, in this embodiment, a locking mechanism 5 is provided operable to prevent rotation of the media player 6 (shown by dotted lines) when located on the support. This may be desirable if the display screen 61 of the media player can display information in one orientation only, e.g. a vertical/portrait orientation, and therefore rotation of the media player when supported is undesirable and/or unnecessary.

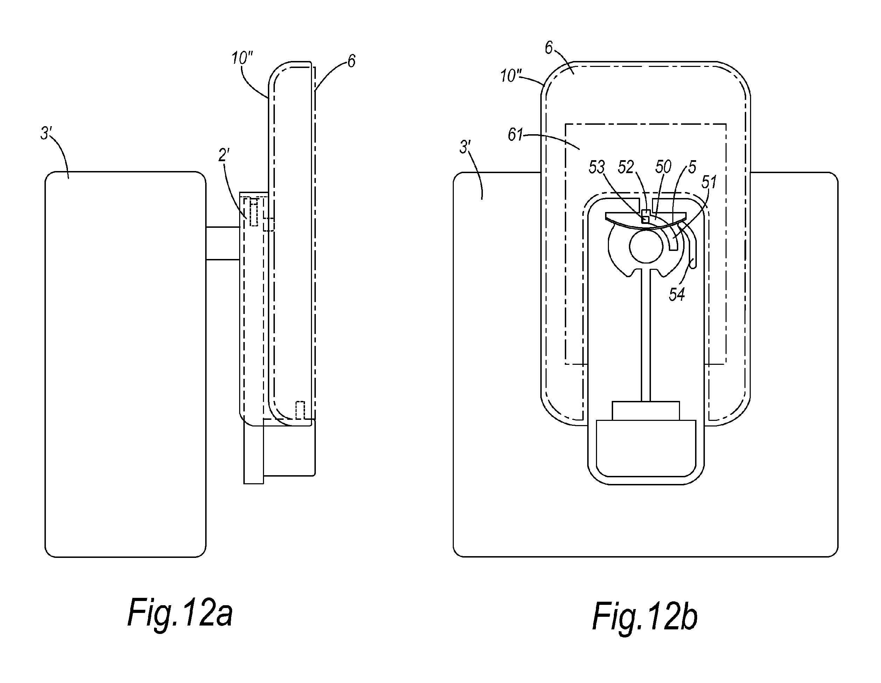

Generally, in this embodiment the locking mechanism 5 prevents rotation of the media player when the media player is mounted to the support plate 2' directly, i.e., without being disposed in the holder 10" as shown in Figs. 11a and 11b, and allows rotation when the media player is mounted to the support plate 2' when disposed in the holder 10" (as shown in Figs. 12a to 13b). Essentially, the holder 10" acts as an adapter to move the locking mechanism 5 between a locked and an unlocked state. Although the holder 10" provides added support to the media player 6, it is understood this additional support may not be necessary when the media player 6 is not to be rotated, and therefore it is reasonable to omit the holder in such circumstances.

The locking mechanism employs a slot 50 and a pin 53 which is located in the slot 50. The slot 50 has a first section 51 and a second section 52. The first section 51 provides a path for the pin 53 to travel during rotation of the holder 10", since it curves around the rotational axis of the holder 10". The second section 52 does not provide a path for the pin 53 to travel during rotation of the media player, making rotation of the media player impossible when the pin 53 is located in this section 52. This is achieved by the second section 52 having a dimension little larger than the cross-section of the pin 53.

The pin 53 is biased by a spring 54 into the second section 52 of the slot 50. However, when the housing 10" is mounted to the support plate 2', the housing 10" is arranged to force the pin 53 into the first section 51. Therefore, when the holder 10" is not used, rotation of the support panel and thus the media player is prevented by the pin 53 being positioned in the second section 52. However, when the holder 10" is used, since the pin 53 is forced into the first section 51, rotation of the support panel 2' and media player 6 is possible.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A media player support comprising:
a base;
a support member rotatably mounted to the base, the support member being for receiving a media player; and
a stem,
wherein the support member is rotatably mounted to the base via the stem such that the support member can be rotated between a first position and a second position, the stem having a channel extending therethrough for receiving a cable for connecting the media player to the base.

2. A media player support according to claim 1, wherein the stem is rotatable relative to the base.

3. A media player support according to claim 1 or claim 2,
wherein the support further comprises a mounting unit for rotatably mounting the support member to the base.

4. A media player support according to claim 3 when dependent on claim 2, wherein the mounting unit includes spaced forward and rear plates, each plate having a circular opening for receiving a portion of the stem and permitting rotation of the stem relative to the mounting unit.

5. A media player support according to any one preceding claim, wherein the stem is provided with at least one cam surface which, in use, is engaged by a biasing member so that the support member is, on rotation, biased to a particular rotational position.

6. A media player support according to claim 5 wherein the stem is provided with provided with a plurality of cam surfaces, one or more of which, in use, are engaged by said biasing member at any one time so that the support member is, on rotation, biased into one of a plurality of rotational positions.

7. A media player support according to any one preceding claim, wherein the stem is associated with a projection,
wherein rotation of the stem causes rotational movement of the projection.

8. A media player support according to claim 7, wherein the support is provided with two stop members, the two stop members defining the limits of angular rotation of the stem, the rotation of the stem being limited by engagement of the projection with one of the two stop members.

9. A media player support according to any one preceding claim, wherein the support member comprises a holder having a main panel and two or more side panels connected to, and projecting from, edges of the main panel, the main panel and the side panels defining a space for receiving a media player such that a rear surface of the media player contacts the main panel, and the side panels contact respective side surfaces of the media player, the side panels being arranged such that, when the media player is received in the space, distal ends of the side panels do not project beyond the side surfaces of the media player.

10. A media player support according to any one of claims 1 to 8, wherein the support member comprises a holder having a main panel and two or more side panels connected to, and projecting from, edges of the main panel, the main panel and the side panels defining a space for receiving a media player such that a rear surface of the media player contacts the main panel, and the side panels contact respective side surfaces of the media player, the main panel and the side panels each having a thickness of less than 3 mm.

11. A media player support according to any one preceding claim, wherein the base is part of, or consists of, a music system having an amplifier and/or speakers

12. A media player support according to any one preceding claim, wherein when the support member moves between the first and second positions, it places the media player in the vertical and horizontal orientations respectively, or in the two horizontal positions 90 degrees either side of the vertical orientation, such that when the display screen is in the vertical orientation, the length direction of the front surface of the media player and of the display screen will extend substantially vertically and the width direction will extend substantially horizontally; and when the display screen is in the horizontal orientation, the length direction of the front surface of the media player and the display screen will extend substantially horizontally and the width direction will extend substantially vertically.

13. A media player support according to any one preceding claim comprising a cable for connecting the media player to the base, the cable being arranged to travel through the channel provided in the stem.

14. A media player support according to any one preceding claim comprising a locking mechanism, the locking mechanism being operable between a first state in which it prevents rotation of the support member between the first and second positions and a second state in which it allows rotation of the support member between the first and second positions.

15. A media player support according to any one preceding claim comprising a damping means for reducing shock applied to the support member upon rotation between the first and second positions.
